# EUROPEAN PATENT APPLICATION

(11) **EP 4 692 184 A1**
(43) Date of publication of application: **11.02.2026**
(21) Application number: 24780236.6
(22) Date of filing: 26.03.2024
(51) Int. Cl.: C08J 5/18, B65D 65/40, C08K 5/053, C08L 29/04

(54) **WATER-SOLUBLE FILM AND PACKAGE**

(30) Priority: 29.03.2023 JP 2023052854
(71) Applicant: Mitsubishi Chemical Corporation, Tokyo 100-8251 (JP)
(72) Inventor: TANIGAWA, Takuma, Tokyo 100-8251 (JP); YOSHIMURA, Nobuyoshi, Tokyo 100-8251 (JP)
(74) Representative: Hoffmann Eitle
(86) International application number: PCT/JP2024/011809
(87) International publication number: WO 2024/204122

(57) **Abstract**

A water-soluble film having an excellent balance between fast solubility and mechanical properties as well as excellent sealability is provided as follows. A water-soluble film contains a polyvinyl alcohol resin (A) and a plasticizer (B). The plasticizer (B) is present in an amount of 30 parts by mass or less per 100 parts by mass of the polyvinyl alcohol resin (A). The plasticizer (B) contains a polyhydric alcohol (b1) with a melting point of 80°C or higher. The polyhydric alcohol (b1) contains xylitol in an amount of 20% by mass or more.

## Description

### TECHNICAL FIELD

The present disclosure relates to a polyvinyl alcohol water-soluble film and a package using the same.

### BACKGROUND ART

Polyvinyl alcohol films are films made of polyvinyl alcohol resins, which are thermoplastic resins with water-solubility. Taking advantage of the water-solubility of polyvinyl alcohol, polyvinyl alcohol films have been used as water-soluble films characterized by its solubility in water, and utilized in a wide range of fields. Specifically, polyvinyl alcohol films are used for packaging applications for chemical agents, (water pressure) transfer films, sanitary supplies such as napkins and disposal diapers, waste disposal supplies such as ostomy bags, medical supplies such as blood-absorbing sheets, temporary base materials for seeding sheets, seed tapes, and embroidery bases, and the like.

Among these, water-soluble films are used for unit packaging (individual packaging) because it is easy to use, saves the time and effort of measuring a dosage in use, and does not contaminate hands, and the unit packaging is attracting attention as chemical agent packaging for laundry detergents, dishwashing detergents, and the like.

For example, there has been proposed a water-soluble film that has excellent mechanical properties and may form a good package that does not lose its tension over time, especially when made into a package containing a liquid such as liquid detergent, in which the water-soluble film includes a plasticizer in an amount of 25 parts by weight or more per 100 parts by weight of a polyvinyl alcohol resin, and the plasticizer is a combination of two plasticizers with different melting points (see, for example, PTL 1).

A water-soluble film that dissolves in both hot and cold water and maintains transparency has been proposed, in which the water-soluble film includes a relatively large amount of plasticizer and includes a compatibilizing agent as an essential component (see, for example, PTL 2).

### RELATED ART DOCUMENT

### PATENT DOCUMENT

PTL 1: JP-A-2017-95679
PTL 2: JP-A-2016-503121

### SUMMARY

### PROBLEMS TO BE SOLVED BY THE DISCLOSURE

In the chemical agent packaging, in individual packaging applications for cosmetics such as rinses, shampoos, and facial cleansers, other than laundry detergents and dishwashing detergents, fast film solubility in a small amount of water is required because the packaging is not stirred in water, or hot water is not used. However, it is sometimes difficult to meet such a requirement with the films described in PTL 1 and PTL 2.

Against this background, an object of the present disclosure is to provide a water-soluble film with an excellent balance between fast solubility and mechanical properties, as well as excellent sealability.

### MEANS FOR SOLVING THE PROBLEMS

In view of the circumstance, the inventors of the present disclosure have conducted elaborate studies and found that a water-soluble film with an excellent balance between fast solubility and mechanical properties, as well as excellent sealability can be obtained by using a plasticizer (B) in an amount of 30 parts by mass or less per 100 parts by mass of a polyvinyl alcohol resin (A), in which the plasticizer (B) contains a polyhydric alcohol (b1) with a melting point of 80°C or higher which contains a particular amount of xylitol.

Specifically, the scope of the present disclosure can be summarized as follows.
[1] A water-soluble film containing a polyvinyl alcohol resin (A) and a plasticizer (B), wherein
   the plasticizer (B) is present in an amount of 30 parts by mass or less per 100 parts by mass of the polyvinyl alcohol resin (A),
   the plasticizer (B) contains a polyhydric alcohol (b1) with a melting point of 80°C or higher, and
   the polyhydric alcohol (b1) contains xylitol in an amount of 20% by mass or more.
[2] The water-soluble film according to [1], wherein the polyhydric alcohol (b1) contains xylitol and at least one other polyhydric alcohol.
[3] The water-soluble film according to [2], wherein the at least one other polyhydric alcohol in the polyhydric alcohol (b1) is a sugar alcohol.
[4] The water-soluble film according to any one of [1] to [3], wherein the plasticizer (B) further contains a polyhydric alcohol (b2) with a melting point of 50°C or lower.
[5] The water-soluble film according to [4], wherein a mass ratio (b1/b2) of the polyhydric alcohol (b1) to the polyhydric alcohol (b2) is 0.5 to 10.
[6] The water-soluble film according to any one of [1] to [5], wherein the polyvinyl alcohol resin (A) contains an unmodified polyvinyl alcohol (a1).
[7] The water-soluble film according to any one of [1] to [6], wherein the water-soluble film has a water content of 3 to 15% by mass.
[8] A package bag including the water-soluble film according to any one of [1] to [7].
[9] A food package including: the package bag according to [8]; and a food contained in the package bag.
[10] An external preparation package including: the package bag according to [8] or [9]; and an external preparation for skin and/or hair contained in the package bag.
[11] An animal detergent package including: the package bag according to any one of [8] to [10]; and an animal detergent contained in the package bag.

### EFFECTS OF THE DISCLOSURE

The water-soluble film according to the present disclosure has an excellent balance between fast solubility and mechanical properties, as well as excellent sealability.

### EMBODIMENTS OF THE DISCLOSURE

As used herein, the expression "X to Y" (X and Y are each a given number) is intended to encompass "preferably more than X" or "preferably less than Y" unless otherwise specified, in addition to the meaning of "X or more and Y or less."

The expression "X or more" (X is a given number) or "Y or less" (Y is a given number) is intended to encompass "preferably greater than X" or "preferably less than Y."

Further, the expression "x and/or y" (x and y are each a given configuration) is intended to mean at least one of x and y and mean the following three meanings: only x; only y; and x and y.

For numerical ranges described herein in steps, the upper or lower limit of the numerical range in one step may be combined as desired with the upper or lower limit of the numerical range in another step. In the numerical ranges described herein, the upper or lower limits of the numerical range may be replaced by values shown in the examples.

Polyvinyl alcohol may be abbreviated as "PVA," a film containing a polyvinyl alcohol resin as a main component may be abbreviated as "PVA film," and a water-soluble film containing a polyvinyl alcohol resin as a main component may be abbreviated as "PVA water-soluble film."

The "main component" refers to a component that has a major effect on the properties of a target, and the content of the component in the target is usually 50% by mass or more, preferably 55% by mass or more, particularly preferably 60% by mass or more, and may be 100% by mass.

The present disclosure will be described specifically below.

A water-soluble film according to an embodiment of the present disclosure (which hereinafter may be referred to as "the present water-soluble film") contains a PVA resin (A) and a plasticizer (B), wherein plasticizer (B) is present in an amount of 30 parts by mass or less per 100 parts by mass of PVA resin (A), plasticizer (B) contains a polyhydric alcohol (b1) with a melting point of 80°C or higher, and polyhydric alcohol (b1) contains xylitol in an amount of 20% by mass or more.

The components and the like of the present water-soluble film will be described below.

### [PVA Resin (A)]

The present water-soluble film is a water-soluble film containing PVA resin (A) as a main component. As used herein "containing PVA resin (A) as a main component" means that PVA resin (A) is present typically in an amount of 50% by mass or more, preferably 55% by mass or more, and particularly preferably 60% by mass or more with respect to the entire water-soluble film. If the proportion of PVA resin (A) is too low, the solubility in water and the mechanical properties of the film tend to be reduced. The upper limit of the proportion of PVA resin (A) is typically 99% by mass or less, preferably 95% by mass or less, and particularly preferably 90% by mass or less, in terms of long-term shape stability.

The "water-soluble film" refers to a film soluble in water around normal temperature (20°C). In the present disclosure, the solubility of the film may be evaluated as follows. The water-soluble film is cut into a size of 3 cm × 5 cm, which is put into a 1 L beaker containing water (1 L) and secured with a jig. With the water temperature kept at 20°C, the water is stirred with a stirrer (rotor length 3 cm, rotation speed 750 rpm), and if dispersion of insoluble particles with a diameter of 1 mm or more is not visually recognized, the film is determined as being soluble.

PVA resin (A) to be used in the present water-soluble film includes an unmodified PVA and a modified PVA resin.

The unmodified PVA and the modified PVA resin may be produced using a production method known in the art, for example, as follows.

The unmodified PVA may be produced by saponifying a vinyl ester polymer obtained by polymerizing a vinyl ester compound.

Examples of the vinyl ester compound include vinyl formate, vinyl acetate, vinyl trifluoroacetate, vinyl propionate, vinyl butyrate, vinyl caprate, vinyl laurate, vinyl versatate, vinyl palmitate, and vinyl stearate. Vinyl acetate is preferably used. The above vinyl ester compounds may be used alone or in combination of two or more.

The modified PVA resin may be produced by copolymerizing the vinyl ester compound and an unsaturated monomer copolymerizable with the vinyl ester compound and saponifying the resulting copolymer.

Examples of the unsaturated monomer copolymerizable with the vinyl ester compound include: olefins such as ethylene, propylene, isobutylene, α-octene, α-dodecene, and α-octadecene; hydroxyl-containing α-olefins such as 3-buten-1-ol, 4-penten-1-ol, and 5-hexen-1-ol, and acylation products and other derivatives of these hydroxyl-containing α-olefins; unsaturated acids such as acrylic acid, methacrylic acid, crotonic acid, maleic acid, maleic anhydride, itaconic acid, and undecylenic acid, and salts, monoesters, and dialkyl esters of these unsaturated acids; amides such as diacetoneacrylamide, acrylamide, and methacrylamide; and olefinsulfonic acids such as ethylenesulfonic acid, allylsulfonic acid, and methallylsulfonic acid, and salts of these olefinsulfonic acids; and N-vinylpyrrolidone. These may be used alone or in combination of two or more.

Examples of the modified PVA resin include those having a primary hydroxyl group in a side chain, for example, in which the number of primary hydroxyl groups in a side chain is typically 1 to 5, preferably 1 to 2, and particularly preferably 1. The modified PVA resin preferably has a secondary hydroxyl group in addition to the primary hydroxyl group. Examples of such a modified PVA resin include a PVA resin having a hydroxyalkyl group in a side chain and a PVA resin having a 1,2-diol structural unit in a side chain. The PVA resin having a 1,2-diol structural unit in a side chain may be produced by, for example, (1) a method in which a copolymer of vinyl acetate and 3,4-diacetoxy-1-butene is saponified; (2) a method in which a copolymer of vinyl acetate and vinyl ethylene carbonate is saponified and decarbonated; (3) a method in which a copolymer of vinyl acetate and 2,2-dialkyl-4-vinyl-1,3-dioxolane is saponified and deketalized; or (4) a method in which a copolymer of vinyl acetate and glycerin monoallyl ether is saponified.

The modified PVA resin to be used in the present water-soluble film is preferably a PA resin modified with at least one hydrophilic group selected from anionic groups such as carboxy group, sulfonic acid group, and phosphoric acid group, and pyrrolidone ring groups, and the like, in terms of solubility. Among these, an anionic group-modified PVA resin is preferably used. Examples of the anionic group include carboxy group, sulfonic acid group, and phosphoric acid group. In terms of long-term stability of solubility, carboxy group and sulfonic acid group are preferred, and carboxy group is particularly preferred.

The carboxy group-modified PVA resin may be produced by any method. Examples of the method include (i) a method in which an unsaturated monomer having a carboxy group and a vinyl ester compound are copolymerized, and then the resulting copolymer is saponified; and (ii) a method in which a vinyl ester compound is polymerized in the presence of a carboxy-containing alcohol, aldehyde, or thiol as a chain transfer agent, and then the resulting polymer is saponified.

Examples of the unsaturated monomer having a carboxy group in the method (i) include ethylenically unsaturated dicarboxylic acids (maleic acid, fumaric acid, itaconic acid, etc.), or ethylenically unsaturated dicarboxylic acid monoesters (maleic acid monoalkyl ester, fumaric acid monoalkyl ester, itaconic acid monoalkyl ester, etc.), or ethylenically unsaturated dicarboxylic acid diesters (maleic acid dialkyl ester, fumaric acid dialkyl ester, itaconic acid dialkyl ester, etc.) [where these diesters need to be converted to carboxy groups by hydrolysis during saponification of the copolymer], or ethylenically unsaturated carboxylic anhydrides (maleic anhydride, itaconic anhydride, etc.), or ethylenically unsaturated monocarboxylic acid ((meth)acrylic acid, crotonic acid, etc.), and salts of these compounds. Among these, it is preferable to use maleic acid, maleic acid monoalkyl ester, maleic acid dialkyl ester, maleate, maleic anhydride, itaconic acid, itaconic acid monoalkyl ester, itaconic acid dialkyl ester, (meth)acrylic acid, or the like. In particular, it is preferable to use maleic acid, maleic acid monoalkyl ester, maleic acid dialkyl ester, maleate, or maleic anhydride. It is even more preferable to use maleic acid monoalkyl ester. These may be used alone or in combination of two or more.

In the method (ii), a compound derived from a thiol which has particularly large chain transfer effect is effective, and examples include compounds having formulae (1) to (3). 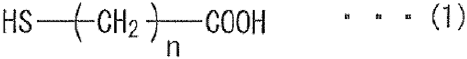 [ In generation formula (1), n is an integer of 0 to 5. ] 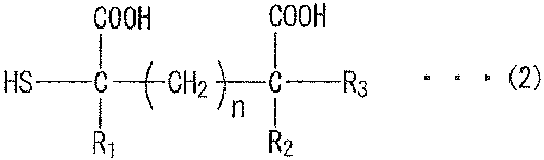 [ In generation formula (2), n is an integer of 0 to 5.
R₁, R₂, R₃ are each a hydrogen atom or a lower alkyl group (optionally having a substituent). ] 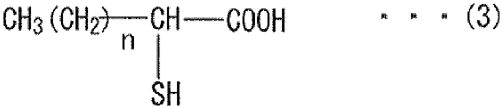 [ In generation formula (3), n is an integer of 0 to 20. ]

Examples also include salts of the compounds having formulae (1) to (3). Specific examples include mercaptoacetic acid salts, 2-mercaptopropionic acid salts, 3-mercaptopropionic acid salts, and 2-mercaptostearic acid salts. These compounds may be used alone or in combination of two or more.

The unsaturated monomer having a carboxy group and the vinyl ester compound may be polymerized with other general monomer to an extent that does not impair the water solubility. Examples of the general monomer include alkyl esters of ethylenically unsaturated carboxylic acids, allyl esters of saturated carboxylic acids, α-olefins, alkyl vinyl ethers, alkyl allyl ethers, (meth)acrylamide, (meth)acrylonitrile, styrene, and vinyl chloride. These may be used alone or in combination of two or more.

The method for producing the carboxy group-modified PVA resin is not limited to the aforementioned methods. For example, a PVA resin (partially saponified or completely saponified) may be allowed to post-react with a carboxy-containing compound, such as dicarboxylic acid, aldehyde carboxylic acid, or hydroxycarboxylic acid, having a functional group reactive with a hydroxyl group.

When a sulfonic acid-modified PVA resin modified with a sulfonic acid group is used, the sulfonic acid-modified PVA resin may be produced by, for example, a method in which a vinyl ester compound is reacted with a comonomer such as vinylsulfonic acid, styrenesulfonic acid, allylsulfonic acid, methallylsulfonic acid, or 2-acrylamido-2-methylpropanesulfonic acid, and the resulting copolymer is saponified; or a method in which vinylsulfonic acid or its salt, 2-acrylamido-2-methylpropanesulfonic acid or its salt, or the like is introduced into a PVA resin by Michael addition reaction.

On the other hand, exemplary methods of post-modification of the unmodified PVA include acetoacetate esterification, acetalization, urethanation, etherification, grafting, phosphate esterification, or oxyalkylenation of the unmodified PVA.

In the present water-soluble film, in terms of safety and stability, PVA resin (A) preferably contains an unmodified PVA (a1), particularly preferably contains an unmodified PVA (a1) as a main component, and even more preferably contains an unmodified PVA (a1) alone.

PVA resin (A) preferably has an average saponification degree of 80 mol% or more, particularly preferably 82 to 99.9 mol%, even more preferably 85 to 98.5 mol%, and especially preferably 85 to 90 mol%. If the average saponification degree is too small, the solubility of the film in water tends to be reduced. If the average saponification degree is too large, the water solubility also tends to be reduced.

The average saponification degree is measured in conformity with JIS K 6726 3.5.

The polymerization degree of PVA resin (A) is generally represented by an aqueous solution viscosity. The 4 mass% aqueous solution viscosity as measured at 20°C is preferably 1 to 60 mPa·s, particularly preferably 2 to 55 mPa·s, and even more preferably 3 to 50 mPa·s.

In terms of the solubility of PVA resin (A), the 4 mass% aqueous solution viscosity as measured at 20°C is preferably 0.5 to 55 mPa·s, more preferably 1 to 45 mPa·s, particularly preferably 2 to 30 mPa·s, even more preferably 3 to 25 mPa·s, and especially preferably 3 to 20 mPa·s.

In terms of the mechanical properties of PVA resin (A), the 4 mass% aqueous solution viscosity as measured at 20°C is preferably 5 to 60 mPa·s, particularly preferably 15 to 55 mPa·s, even more preferably 17 to 53 mPa·s, especially preferably 21 to 50 mPa·s, and especially preferably 21.5 to 48 mPa·s.

If the viscosity is too small, the mechanical strength of the water-soluble film as a packaging material tends to be reduced. If the viscosity is too large, the productivity tends to be reduced, or the solubility tends to be reduced.

The 4 mass% aqueous solution viscosity is measured in conformity with JIS K 6726 3.11.2.

When unmodified PVA (a1) is used, the average saponification degree of unmodified PVA (a1) is preferably 80 mol% or more, particularly preferably 82 to 98.5 mol%, and even more preferably 85 to 90 mol%. If the average saponification degree is too small, the solubility of the water-soluble film in water tends to be reduced. If the average saponification degree is too large, the solubility in water also tends to be reduced.

When unmodified PVA (a1) is used, the 4 mass% aqueous solution viscosity of unmodified PVA (a1) as measured at 20°C is preferably 1 to 60 mPa·s, particularly preferably 2 to 55 mPa·s, and even more preferably 3 to 50 mPa·s. If the viscosity is too small, the mechanical strength of the water-soluble film as a packaging material tends to be reduced. If the viscosity is too large, the productivity tends to be reduced due to high aqueous solution viscosity during film formation, or the solubility tends to be reduced.

The modified PVA resin preferably has a modification degree of 15 mol% or less, particularly preferably 10 mol% or less, even more preferably 5 mol% or less, and especially preferably 2 mol% or less. The lower limit is typically 0 mol%. If the modification degree is too large, the productivity of the PVA resin tends to be reduced, the biodegradability tends to be reduced, and blocking is more likely to occur.

In the present water-soluble film, PVA resin (A) may be used alone, or two or more types of unmodified PVA or PV resin different in at least one of saponification degree, viscosity, modified species, and modification degree may be used in combination. In terms of ease of adjusting dissolution speed and mechanical properties, it is preferable to use two or more types in combination. For example, two or more types of unmodified PVA may be used in combination, two or more types of modified PVA resin may be used in combination, or one or more types of unmodified PVA and one or more types of modified PVA resin may be used in combination.

Among these, it is preferable to use unmodified PVA in terms of safety and stability, and it is preferable to use two or more types of unmodified PVA in combination in terms of ease of adjusting the balance between solubility and mechanical properties.

### [Plasticizer (B)]

Examples of plasticizer (B) to be used in the present water-soluble film typically include glycerol such as glycerin, diglycerin, and triglycerin; alkylene glycols such as triethylene glycol, polyethylene glycol, polypropylene glycol, dipropylene glycol, and propylene glycol; trimethylolpropane; and sugar alcohols such as sorbitol, xylitol, maltitol, mannitol, and erythritol. These may be used alone or in combination of two or more.

The present water-soluble film contains a polyhydric alcohol (b1) with a melting point of 80°C or higher, as plasticizer (B).

Many sugar alcohols, monosaccharides, and polysaccharides are applicable as polyhydric alcohol (b1) with a melting point of 80°C or higher. Among those, examples of polyhydric alcohol (b1) include dihydric alcohols such as salicyl alcohol (83°C), catechol (105°C), resorcinol (110°C), hydroquinone (172°C), bisphenol A (158°C), bisphenol F (162°C), and neopentyl glycol (127°C); trihydric alcohols such as phloroglucinol (218°C); tetrahydric alcohols such as erythritol (121°C), threitol (88°C), and pentaerythritol (260°C); pentahydric alcohols such as xylitol (92°C), arabitol (103°C), fucitol (153°C), glucose (146°C), and fructose (104°C); hexahydric alcohols such as mannitol (166°C), sorbitol (95°C), and inositol (225°C); octahydric alcohols such as lactitol (146°C), sucrose (186°C), and trehalose (97°C); and nona- or higher hydric alcohols such as maltitol (145°C). These may be used alone or in combination of two or more. Melting points are shown in parentheses.

Among the above, those with a melting point of 85°C or higher are preferred in terms of tensile strength of the water-soluble film, and those with a melting point of 90°C or higher are particularly preferred. The upper limit of the melting point is preferably 300°C or lower, particularly preferably 200°C or lower, and even more preferably 100°C or lower.

Polyhydric alcohol (b1) to be used in the present water-soluble film contains xylitol in an amount of 20% by mass or more, preferably 30% to 100% by mass, particularly preferably 40% to 95% by mass, and even more preferably 50% to 90% by mass.

The proportion of xylitol is preferably 10% by mass or more with respect to the entire plasticizer (B), particularly preferably 15 to 95% by mass, even more preferably 20 to 80% by mass, and especially preferably 25 to 70% by mass.

If the proportion of xylitol is too small, it tends to be difficult to adjust the balance between solubility and mechanical properties. If the proportion of xylitol is too large, the mechanical properties and the formability of the film tend to be reduced.

Polyhydric alcohol (b1) may contain xylitol alone. However, in terms of mechanical properties, it is preferable that polyhydric alcohol (b1) contains xylitol and at least one other polyhydric alcohol, and in terms of safety and stability, it is preferable that the at least one other polyhydric alcohol in polyhydric alcohol (b1) is a sugar alcohol.

The polyhydric alcohol other than xylitol preferably has 4 or more hydroxyl groups per molecule, particularly preferably 5 to 10 hydroxyl groups, and even more preferably 6 to 8 hydroxyl groups, in terms of compatibility with PVA resin (A). Suitable examples include sorbitol, sucrose, and trehalose.

Polyhydric alcohol (b1) preferably has a molecular weight of 150 or more, particularly preferably 160 to 500, and even more preferably 180 to 400, in terms of toughness of the water-soluble film. Specifically, suitable examples include sorbitol and sucrose.

When two or more plasticizers (B) are used in combination in the present water-soluble film, it is preferable to use a polyhydric alcohol (b2) with a melting point of 50°C or lower in terms of mechanical properties. Examples of polyhydric alcohol (b2) with a melting point of 50°C or lower include aliphatic alcohols, preferably, such as dihydric alcohols such as ethylene glycol (-13°C), diethylene glycol (-11°C), triethylene glycol (-7°C), propylene glycol (-59°C), tetraethylene glycol (-5.6°C), 1,3-propanediol (-27°C), 1,4-butanediol (20°C), 1,6-hexanediol (40°C), dipropylene glycol (-39°C), tripropylene glycol, and polyethylene glycol with a molecular weight of 2000 or less; and tri- or higher hydric alcohols such as glycerin (18°C), diglycerin, and triethanolamine (21°C). In particular, glycerin, propylene glycol, and dipropylene glycol are preferred. These may be used alone or in combination of two or more. Melting points are shown in parentheses.

Among the above, those with a melting point of 30°C or lower are particularly preferred in terms of flexibility of the water-soluble film, and those with a melting point of 20°C or lower are even more preferred. The lower limit of the melting point is typically -80°C or higher, preferably -60°C or higher, particularly preferably -10°C or higher, and especially preferably 0°C or higher.

Polyhydric alcohol (b2) preferably has 4 or less hydroxyl groups per molecule, and particularly preferably 3 or less hydroxyl groups, in terms of ease of controlling flexibility near normal temperature (25°C). Specifically, suitable examples include glycerin and propylene glycol.

Polyhydric alcohol (b2) preferably has a molecular weight of 100 or less, particularly preferably 50 to 100, and even more preferably 60 to 95, in terms of ease of controlling flexibility. Specifically, suitable examples include glycerin and propylene glycol.

Plasticizer (B) is present in an amount of 30 parts by mass or less per 100 parts by mass of PVA resin (A), preferably 1 to 28 parts by mass, even more preferably 5 to 25 parts by mass, and especially preferably 6 to 20 parts by mass.

If the proportion of plasticizer (B) is too high, blocking tends to occur, or it tends to be difficult to adjust the balance between mechanical properties and solubility.

A mass ratio (b1/b2) of polyhydric alcohol (b1) to polyhydric alcohol (b2) is preferably 0.5 to 10, particularly preferably 0.8 to 8, even more preferably 1 to 7, and especially preferably 1.5 to 6.

When polyhydric alcohol (b2) is used, polyhydric alcohol (b2) is preferably present in an amount of 1 to 20 parts by mass per 100 parts by mass of PVA resin (A), particularly preferably 1.5 to 18 parts by mass, even more preferably 2 to 15 parts by mass, and especially preferably 2.5 to 10 parts by mass.

If the proportion of polyhydric alcohol (b2) is too low, the mechanical properties tend to be reduced. If the proportion of polyhydric alcohol (b2) is too high, the mechanical properties and the formability of the film tend to be reduced.

### [Filler]

Examples of a filler to be used in the present water-soluble film include an organic filler and an inorganic filler. In particular, an organic filler is suitable.

The filler preferably has an average particle diameter of 0.1 to 50 µm and particularly preferably 1 to 35 µm. The average particle diameter of the filler is calculated based on a D50 value of cumulative volume distribution (a particle diameter of cumulative 50% of particles) measured by a laser diffraction particle size distribution analyzer.

The organic filler to be used in the present water-soluble film refers to a particulate substance (primary particles) of an organic compound in any form such as needle form, bar form, lamellar form, scale form, and spherical form, or an agglomerate (secondary particles) of the particulate substance.

The organic filler is mainly selected from polymer compounds, and examples include melamine resins, polymethyl (meth)acrylate resins, polystyrene resins, starches, polylactic acids, and other biodegradable resins. These may be used alone or in combination of two or more. Among these, polymethyl (meth)acrylate resins, polystyrene resins, and biodegradable resins such as starches are preferred. In particular, starches are preferred in terms of dispersibility in PVA resin (A).

Examples of the starches include raw starches (corn starch, potato starch, sweet potato starch, wheat starch, cassava starch, sago starch, tapioca starch, sorghum starch, rice starch, pea starch, kudzu starch, bracken starch, lotus starch, water chestnut starch, etc.), physically modified starches (α-starch, fractionated amylose, moist heat-treated starch, etc.), enzyme-modified starches (hydrolyzed dextrin, enzyme-decomposed dextrin, amylose, etc.), chemically degraded starches (acid-treated starch, hypochlorous acid-oxidized starch, dialdehyde starch, etc.), and chemically modified starch derivatives (esterified starch, etherified starch, cationized starch, crosslinked starch, etc.). These may be used alone or in combination of two or more. Among these, the raw starches, particularly corn starch and rice starch, are preferably used in terms of easy availability and biodegradability.

The organic filler preferably has an average particle diameter of 5 to 50 µm, particularly preferably 10 to 40 µm, and even more preferably 15 to 35 µm. If the average particle diameter is too small, the film is more susceptible to blocking. If the average particle diameter is too large, the particles of the filler are likely to agglomerate, resulting in poor dispersibility, or the film tends to suffer pinholes when stretched during film processing.

The inorganic filler to be used in the present water-soluble film refers to a particulate substance (primary particles) of an inorganic compound in any form such as needle form, bar form, lamellar form, scale form, and spherical form, or an agglomerate (secondary particles) of the particulate substance.

Examples of the inorganic filler include inorganic oxide compounds such as silica (silicon dioxide), diatomite, titanium oxide, calcium oxide, magnesium oxide, aluminum oxide, barium oxide, germanium oxide, tin oxide, and zinc oxide, talc, clay, kaolin, mica, asbestos, gypsum, graphite, glass balloons, glass beads, calcium sulfate, barium sulfate, ammonium sulfate, calcium sulfite, calcium carbonate, calcium carbonate whisker, magnesium carbonate, dawsonite, dolomite, potassium titanate, carbon black, glass fibers, alumina fibers, boron fibers, processed mineral fibers, carbon fibers, hollow carbon spheres, bentonite, montmorillonite, copper powder, sodium sulfate, potassium sulfate, zinc sulfate, copper sulfate, iron sulfate, magnesium sulfate, aluminum sulfate, aluminum potassium sulfate, ammonium nitrate, sodium nitrate, potassium nitrate, aluminum nitrate, ammonium chloride, sodium chloride, potassium chloride, magnesium chloride, calcium chloride, sodium phosphate, and potassium chromate. These may be used alone or in combination of two or more.

Among these, inorganic oxide compounds, silica, and talc are preferred. In particular, titanium oxide, silica, and talc are preferred, and silica is even more preferred.

The inorganic filler preferably has an average particle diameter of 1 to 20 µm, particularly preferably 2 to 15 µm, and even more preferably 3 to 10 µm. If the average particle diameter is too small, the film is more susceptible to blocking, or the flexibility and/or toughness of the film tends to be reduced. If the average particle diameter is too large, the water sealability tends to be reduced.

The proportion of the filler is preferably 1 to 30 parts by mass per 100 parts by mass of PVA resin (A), particularly preferably 2 to 25 parts by mass, and even more preferably 2.5 to 20 parts by mass. If the proportion of the filler is too low, the film is more susceptible to blocking. If the proportion of the filler is too high, the flexibility and/or toughness of the film tends to be reduced.

In terms of the balance between the antiblocking properties and the mechanical properties of the film, the filler is preferably present in an amount of 10 parts by mass or less per 100 parts by mass of PVA resin (A), particularly preferably 8 parts by mass or less, even more preferably 0.1 to 6 parts by mass, and especially preferably 0.5 to 5 parts by mass.

### [Surfactant (D)]

The present water-soluble film may further contain a surfactant (D) if necessary.

Surfactant (D) is contained in order to improve the peelability from a cast surface during production of the present water-soluble film. Examples of surfactant (D) include nonionic surfactants, cationic surfactants, and anionic surfactants. Examples of the surfactant include polyoxyethylene nonyl phenyl ether, polyoxyethylene octyl nonyl ether, polyoxyethylene dodecyl phenyl ether, polyoxyethylene alkyl allyl ether, polyoxyethylene sorbitan monolaurate, polyoxyethylene sorbitan monopalmitate, polyoxyethylene sorbitan monostearate, polyoxyethylene sorbitan monooleate, polyoxyalkylene alkyl ether phosphate monoethanolamine salts, polyoxyethylene alkylamino ethers such as polyoxyethylene laurylamino ether and polyoxyethylene stearylamino ether. Among these, polyoxyalkylene alkyl ether phosphate monoethanolamine salts and polyoxyethylene laurylamino ether are preferred in terms of production stability. Only one of these may be used, or two or more may be used in combination. It is also preferable to use nonionic and anionic surfactants in combination.

The proportion of surfactant (D) is preferably 0.1 to 5 parts by mass per 100 parts by mass of PVA resin (A), particularly preferably 0.2 to 4.5 parts by mass, and even more preferably 0.3 to 4 parts by mass. If the proportion of surfactant (D) is too low, the peelability of the formed water-soluble film from a cast surface of a film forming apparatus tends to be reduced, resulting in lower productivity. If the proportion of surfactant (D) is too high, inconvenience tends to occur, such as reduction of adhesive strength during sealing performed when the water-soluble film is formed into a package.

It is preferable that the present water-soluble film further contains an antioxidant in order to suppress yellowing to an extent that does not impair the object of the present disclosure. Examples of the antioxidant include sulfites such as sodium sulfite, potassium sulfite, calcium sulfite, and ammonium sulfite, tartaric acid, ascorbic acid, sodium thiosulfate, catechol, and rongalite. These may be used alone or in combination of two or more. Among these, sulfites are preferred, and sodium sulfite is particularly preferred. The amount of the antioxidant blended is preferably 0.1 to 10 parts by mass per 100 parts by mass of PVA resin (A), even more preferably 0.2 to 5 parts by mass, and particularly preferably 0.3 to 3 parts by mass.

The present water-soluble film may further contain perfume, antirust agent, anti-mold agent, colorant, bulking agent, defoaming agent, UV absorber, fluorescent brightener, liquid paraffins, and bitter component (e.g., denatonium benzoate) to an extent that does not impair the object of the present disclosure (for example, 5 parts by mass or less per 100 parts by mass of PVA resin (A)). These may be used alone or in combination of two or more.

### <Production of Water-Soluble Film>

In the water-soluble film, PVA resin (A), plasticizer (B), and if necessary filler (C), surfactant (D), and the like are blended and dissolved or dispersed in water to prepare a film-forming material, and the film-forming material is formed into a film as a water-soluble film. The steps for producing the present water-soluble film will now be described.

### [Dissolution Step]

In a dissolution process, a PVA resin composition including the blended components is dissolved or dispersed in water to prepare an aqueous solution or an aqueous dispersion serving as a film-forming material.

Normal-temperature dissolution, high-temperature dissolution, pressure dissolution, or the like is typically employed as a dissolution method for dissolving the PVA resin composition in water. Among these, high-temperature dissolution is preferred in terms of less undissolved residues and excellent productivity.

The film-forming material preferably has a solid content concentration of 10 to 65% by mass, particularly preferably 12 to 50% by mass, and even more preferably 15 to 40% by mass. If the solid content concentration is too low, the productivity of the film tends to be reduced. If the solid content concentration is too high, the viscosity tends to be too high, requiring a longer time to defoam the film-forming material or causing die lines during film formation.

The film-forming material preferably has an aqueous solution viscosity of 3000 to 12000 mPa·s, particularly preferably 4000 to 11000 mPa·s, and even more preferably 5000 to 10000 mPa·s. If the concentration is too low, the productivity of the film tends to be reduced, or crawling tends to occur. If the concentration is too high, the viscosity tends to be too high, requiring a longer time to defoam the film-forming material or causing die lines during film formation.

### [Film Formation Step]

In a film formation step, the film-forming material prepared in the dissolution step is formed into a film, which is dried if necessary to produce a water-soluble film.

In film formation, for example, melt extrusion or casting may be employed. In terms of accuracy in film thickness, casting is preferred.

In performing casting, for example, the film-forming material is ejected from a slit such as a T-slit die and casted onto a cast surface such as a metal surface of an endless belt or a drum roll, or a plastic substrate such as a polyethylene terephthalate film or polypropylene. The casted material is then dried to produce the present water-soluble film.

In the film formation step, the present water-soluble film is peeled from the cast surface or the like after drying, and transported and taken up on a core to prepare a film roll.

The resulting film roll may be supplied as it is as a product. Preferably, the film slit into a film width of a desired size may be supplied as a film roll.

In this way, the present water-soluble film may be produced.

The thickness of the present water-soluble film is selected as appropriate according to applications and the like, preferably 10 to 130 µm, particularly preferably 15 to 110 µm, and even more preferably 20 to 100 µm. If the thickness is too small, the mechanical strength of the film tends to be reduced. If the thickness is too large, the speed of dissolution in water tends to be reduced, and the film formation efficiency also tends to be reduced.

The width of the present water-soluble film is selected as appropriate according to applications and the like, preferably 300 to 5000 mm, particularly preferably 500 to 4000 mm, and even more preferably 600 to 3000 mm. If the width is too small, the production efficiency tends to be reduced. If the width is too large, controlling slackness and film thickness tends to be difficult.

The length of the present water-soluble film is selected as appropriate according to applications and the like, preferably 100 to 20000 m, particularly preferably 800 to 15000 m, and even more preferably 1000 to 10000 m. If the length is too small, film switching tends to require time and effort. If the length is too large, tight winding tends to result in poor appearance, or the mass tends to be too heavy.

The present water-soluble film may have a smooth surface. However, the film may be subjected to texture processing on one side or both sides, for example, by imparting an emboss pattern, a minute uneven pattern, or a special engraved pattern, in terms of antiblocking properties, sliding properties during processing, reduction in adhesion between the products, and appearance.

The present water-soluble film preferably has a water content of 3 to 15% by mass in terms of mechanical strength and heat sealability, particularly preferably 5 to 10% by mass, and even more preferably 6 to 8% by mass. If the water content is too low, the film tends to be too hard, leading to reduction in formability in making a package or reduction in impact resistance of the package, or the film tends to have poor sealability. If the water content is too high, blocking tends to occur. The water content may be adjusted by setting drying conditions and moisture control conditions as appropriate.

The water content is measured in conformity with JIS K 6726 3.4, and the resulting volatile content is defined as water content.

The present water-soluble film is suitable for various packaging applications, such as unit packaging applications for various contents, (water pressure) transfer films, sanitary supplies such as napkins and disposal diapers, waste disposal supplies such as ostomy bags, medical supplies such as blood-absorbing sheets, temporary base materials for seeding sheets, seed tapes, and embroidery bases, and the like. Among these, the present water-soluble film may be suitable for unit packaging applications (individual packages) for various contents.

### <Individual Package>

An individual package according to an exemplary embodiment of the present disclosure includes a package bag formed from the present water-soluble film and a content such as a detergent contained in the package bag. The individual package retains its shape of containing the content inside during storage. In use, the individual package (water-soluble film) comes into contact with water, so that the individual package (water-soluble film) dissolves, and the content inside flows out from the individual package.

Examples of the content contained in the individual package include animal-derived foods (primary products) such as meat, fish, shellfish, eggs, milk, fats and oils; grains such as rice, wheat, soybeans, red beans, and corn; plant-derived foods (primary products) such as seeds such as almonds, walnuts, and peanuts, potatoes, beans, vegetables, fruits, mushrooms, fats and oils, and seaweeds; and food products such as secondary products (processed foods, alternative foods); external preparations for skin and/or hair, such as body detergents, hair detergents (shampoos), skin preparations (e.g., shaving creams, moisturizing lotions, etc.), hair preparations (rinses, conditioners, etc.); oral preparations such as toothpaste; agricultural chemicals such as germicides, herbicides, and fertilizers; dishwashing detergents; chemical agents for clothing such as laundry detergents and fabric softeners; and animal preparations such as animal laundry detergents and animal detergents (shampoos, rinses, etc.). These may be used alone or in combination of two or more.

The content may be in the form of liquid, solid, or gel. In the case of liquid, the content is liquid at 20°C. In the case of solid, the content may be in a granular, tablet, or powdery form. The form of the content may be selected as appropriate according to the application. For example, in food packaging, it is preferable that a solid (granular, tablet, powdery) is contained. In packaging for external preparations for skin and/or hair, it is preferable that a liquid, granular, or powdery content is contained. The pH of the content may be alkaline, neutral, or acidic.

Since the present water-soluble film has an excellent balance between fast solubility and mechanical properties, as well as excellent sealability, the present water-soluble film is preferably used for packaging foods, external preparations for skin and/or hair, and animal detergents, other than laundry detergents and dishwashing detergents, and is particularly suitable for their unit packaging applications (individual packages).

The present water-soluble film may be made into an individual package by a known method. Examples of the method include a method in which a film formed into a bag is filled with a content in a separate step; a method in which forming a bag and filling a content are performed simultaneously using an automatic filling machine, especially a vertical pillow-type machine; or a method in which the film is vacuum-formed and filled with an appropriate amount of content, and then laminated with another film and sealed. The seal of the bag and the seal of the film in vacuum-forming may be heat seal, water seal, or glue seal. Among these, heat seal is preferred in terms of versatility.

The size (volume, length, width, and thickness) of the individual package obtained above is selected as appropriate, and the volume of the content is also selected as appropriate.

For example, the volume of the individual package is selected as appropriate, typically 1 to 20 mL, more preferably 3 to 12 mL, and especially preferably 5 to 10 mL.

The thickness of the individual package is typically 0.5 to 60 mm, preferably 5 to 50 mm, and more preferably 10 to 40 mm.

The length of the individual package is typically 10 to 60 mm, preferably 15 to 50 mm, and more preferably 20 to 40 mm.

The width of the individual package is typically 10 to 60 mm, preferably 15 to 50 mm, and more preferably 20 to 40 mm.

The shape of the individual package is selected as appropriate and is not limited. For example, the individual package has the shape of an approximate cube, an approximate sphere, an approximate oblate spheroid, an approximate teardrop, or the like. The individual package may have a plurality of compartments.

The number of compartments in the package is selected as appropriate according to the type of content and is not limited. For example, the number of compartments is 2 to 10, preferably 3 to 8, and more preferably 4 to 6. It is preferable that in a plurality of compartments, different types of content are packaged for each compartment.

The package typically has a smooth surface, for example. However, the package (water-soluble film) may be subjected to texture processing on its exterior surface, for example, by imparting an emboss pattern, a minute uneven pattern, or a special engraved pattern, in terms of antiblocking properties, sliding properties during processing, reduction in adhesion between the products (individual packages), and appearance.

### EXAMPLES

The present disclosure will be described more specifically below using examples. However, it should be understood that the present disclosure is not limited to the following examples within the scope of the present disclosure.

In the examples, "parts" and "%" are based on mass.

The following ingredients were prepared for water-soluble films.

### [PVA Resin (A)]

Unmodified PVA resin (a1): a 4% aqueous solution viscosity of 5 mPa·s as
measured at 20°C and an average saponification degree of 88 mol%
Unmodified PVA resin (a2): a 4% aqueous solution viscosity of 22 mPa·s as
measured at 20°C and an average saponification degree of 88 mol%
Unmodified PVA resin (a3): a 4% aqueous solution viscosity of 40 mPa·s as
measured at 20°C and an average saponification degree of 88 mol%

### [Plasticizer (B)]

Plasticizer (b1): xylitol, sorbitol
Plasticizer (b2): glycerin

### [Other Additives]

Starch (average particle diameter 20 µm)

### <Example 1>

100 parts of unmodified PVA resin (a2) as PVA resin (A), 7.8 parts of xylitol and 6.5 parts of sorbitol as plasticizer (b1), 2.5 parts of glycerin as plasticizer (b2), 0.8 parts of starch as a filler, and water were mixed, and these ingredients were dissolved in water to obtain a PVA aqueous solution (solid content concentration 25%) in which starch was dispersed.

The resulting PVA aqueous solution was defoamed at 80°C and cooled to 40°C. The PVA aqueous solution was casted on a polypropylene film and passed through a 10 m drying chamber (60 to 80°C) at 2 to 4 m/min for drying, resulting in a water-soluble film with a thickness of 79 µm and a water content of 7%.

The resulting water-soluble film was evaluated according to the methods described below. The results are listed in Table 1 below.

### <Solubility>

### 1. Dissolution Break Evaluation Method and Evaluation Criteria

### [Evaluation Method]

The water-soluble film obtained above was allowed to stand under a moisture control condition at 23°C and 50% RH for 4 days before measurement and then cut into a size of 3.5 cm × 3.5 cm, which was put into a 1 L beaker containing water (1 L) and secured with a jig. With the water temperature kept at 20°C, the water was stirred with a stirrer (rotor length 3 cm, rotation speed 750 rpm). If the film was completely broken into two pieces, the film was determined as "dissolved and broken," and the time taken for being dissolved and broken was evaluated based on the following criteria.

### [Evaluation Criteria]

(Excellent) The film was dissolved and broken in less than 40 seconds.
(Very good) The film was dissolved and broken in less than 40 to 60 seconds.
(Good) The film was dissolved and broken in 60 to 300 seconds.
(Poor) The film was not dissolved and broken even after 300 seconds.

### 2. Complete Dissolution Evaluation Method and Evaluation Criteria [Evaluation Method]

The water-soluble film obtained above was allowed to stand under a moisture control condition at 23°C and 50% RH for 4 days before measurement and then cut into a size of 3.5 cm × 3.5 cm, which was put into a 1 L beaker containing water (1 L) and secured with a jig. With the water temperature kept at 20°C, the water was stirred with a stirrer (rotor length 3 cm, rotation speed 750 rpm). If dispersion of insoluble particles with a diameter of 1 mm or more was not visually recognized, the film was determined as being "completely dissolved," and the time taken for being completely dissolved was evaluated based on the following criteria.

### [Evaluation Criteria]

(Excellent) The film was completely dissolved in less than 90 seconds.
(Very good) The film was completely dissolved in less than 90 to 150 seconds.
(Good) The film was completely dissolved in 150 to 300 seconds.
(Poor) The film was not completely dissolved even after 300 seconds.

### <Mechanical Properties>

### [Evaluation Method]

The tensile strength and the tensile elongation of the water-soluble film obtained above were measured in conformity with JIS K 7127. The water-soluble film was allowed to stand under a moisture control condition at 23°C and 50% RH for 4 days or longer before measurement. Then, under this environment, the tensile strength and the tensile elongation of the water-soluble film were measured using AUTOGRAPH AG-IS (from Shimadzu Corporation) at a pulling rate of 200 mm/min (film width 10 mm, distance between chucks 50 mm). These measurement values were evaluated based on the following criteria.

### [Evaluation Criteria]

(Very good) The tensile strength was 25 MPa or more, and the tensile elongation was above 300%.
(Good) The tensile strength was 25 MPa or more, and the tensile elongation was 200 to 300%.
(Poor) The tensile strength was 0 to less than 25 MPa and/or the tensile elongation was less than 200%.

### <Sealability>

### [Evaluation Method]

### [Breaking Strength When Heat-Seal Portion Is Peeled]

The breaking strength was measured in accordance with JIS K 7127 (1999) as follows. Specifically, two water-soluble films with moisture controlled under an environment at 23°C and 50% RH for one day were overlaid each other and heat-sealed once at a temperature of 150°C and a pressure of 0.2 MPa for 0.5 seconds with a seal width of 2 mm, and then allowed to stand at 23°C and 50% RH for 2 hours with no load on the heat-seal portion. Then, the breaking strength was determined by the maximum force (N) measured at a pulling speed of 200 mm/min using AUTOGRAPH "AG-Xplus" from Shimadzu Corporation (film width 15 mm, distance between chucks 50 mm).

### [Evaluation Criteria]

(Very good) The breaking strength was 5 N/15 mm or more, and the heat seal portion had cohesive failure.
(Poor) The breaking strength was less than 5 N/15 mm, and the heat seal portion had interfacial failure.

### <Examples 2 to 4, Comparative Examples 1 to 4>

Water-soluble films were each produced in the same way as in Example 1 except that the formulation was changed as listed in Table 1. Each of the obtained water-soluble films was evaluated according to the same methods as in Example 1. The results are listed in Table 1 below.

**Table 1**

| | PVA resin (A) (parts) | | Plasticizer (B) (parts) | | | | | | Water-soluble film | | | | |
|---|---|---|---|---|---|---|---|---|---|---|---|---|---|
| | | | (b1) | | (b2) | Total | Xylitol/(b1) (%) | (b1/b2) | Film thickness (*µ*m) | Mechanical properties | Solubility (20 °C) | | Sealability |
| | Type | Content | Xylitol | Sorbitol | Glycerin | | | | | | Dissolved and broken | Completely dissolved | |
| Example 1 | (a2) | 100 | 7.8 | 6.5 | 2.5 | 16.8 | 55 | 5.7 | 79 | Very good | Excellent | Excellent | Very good |
| Example 2 | (a1) | 100 | 7.8 | 6.5 | 2.5 | 16.8 | 55 | 5.7 | 78 | Very good | Excellent | Excellent | Very good |
| Example 3 | (a1) (a3) | 30 70 | 7.8 | 6.5 | 2.5 | 16.8 | 55 | 5.7 | 81 | Very good | Very good | Very good | Very good |
| Example 4 | (a1) | 100 | 12.3 | 2 | 4.5 | 18.8 | 86 | 3.2 | 85 | Very good | Excellent | Excellent | Very good |
| Comparative Example 1 | (a1) | 100 | 0.3 | 6.5 | 10 | 16.8 | 4 | 0.7 | 81 | Poor | Excellent | Very good | Very good |
| Comparative Example 2 | (a1) (a3) | 30 70 | 0.3 | 6.5 | 10 | 16.8 | 4 | 0.7 | 79 | Poor | Very good | Very good | Very good |
| Comparative Example 3 | (a2) | 100 | 8.52 | 6.53 | 36.98 | 52.03 | 57 | 0.4 | 79 | Poor | Excellent | Excellent | - |
| Comparative Example 4 | (a1) | 100 | 8.52 | 6.53 | 36.98 | 52.03 | 57 | 0.4 | 85 | Poor | Excellent | Excellent | - |

The results in Table 1 demonstrate that the water-soluble films of Examples 1 to 4, which satisfy the composition specified in the present disclosure, have excellent mechanical properties and fast solubility, as well as excellent sealability, and are suitable for packaging applications. These effects also indicate that the water-soluble films are suitable for food packaging applications, packaging applications for external preparations for skin and/or hair, and animal detergent applications.

In contrast, the water-soluble films of Comparative Examples 1 to 4, which did not satisfy the composition specified in the present disclosure, were inferior in at least one of mechanical properties and solubility.

While specific forms of the embodiments of the present disclosure have been shown in the above examples, the examples are merely illustrative and should not be interpreted in a limited sense. Various modifications apparent to those skilled in the art are intended to be included in the scope of the present disclosure.

### INDUSTRIAL APPLICABILITY

The water-soluble film according to the present disclosure has an excellent balance between fast solubility and mechanical properties as well as excellent sealability, and is usable for various packaging applications and particularly suitable for unit packaging applications (individual packages) for various contents.

## Claims

1. A water-soluble film comprising a polyvinyl alcohol resin (A) and a plasticizer (B), wherein
the plasticizer (B) is present in an amount of 30 parts by mass or less per 100 parts by mass of the polyvinyl alcohol resin (A),
the plasticizer (B) comprises a polyhydric alcohol (b1) with a melting point of 80°C or higher, and
the polyhydric alcohol (b1) comprises xylitol in an amount of 20% by mass or more.

2. The water-soluble film according to claim 1, wherein the polyhydric alcohol (b1) comprises xylitol and at least one other polyhydric alcohol which is other than xylitol.

3. The water-soluble film according to claim 2, wherein the at least one other polyhydric alcohol in the polyhydric alcohol (b1) is a sugar alcohol.

4. The water-soluble film according to any one of claims 1 to 3, wherein the plasticizer (B) further comprises a polyhydric alcohol (b2) with a melting point of 50°C or lower.

5. The water-soluble film according to claim 4, wherein a mass ratio (b1/b2) of the polyhydric alcohol (b1) to the polyhydric alcohol (b2) is from 0.5 to 10.

6. The water-soluble film according to any one of claims 1 to 5, wherein the polyvinyl alcohol resin (A) comprises an unmodified polyvinyl alcohol (a1).

7. The water-soluble film according to any one of claims 1 to 6, wherein the water-soluble film has a water content of 3 to 15% by mass.

8. A package bag comprising the water-soluble film according to any one of claims 1 to 7.

9. A food package comprising: the package bag according to claim 8; and a food contained in the package bag.

10. An external preparation package comprising: the package bag according to claim 8 or 9; and an external preparation for skin and/or hair contained in the package bag.

11. An animal detergent package comprising: the package bag according to any one of claims 8 to 10; and an animal detergent contained in the package bag.
